# EUROPÄISCHE PATENTANMELDUNG

(11) **EP 3 919 417 A1**
(43) Veröffentlichungstag der Anmeldung: **08.12.2021**
(21) Anmeldenummer: 20177882.6
(22) Anmeldetag: 02.06.2020
(51) Int. Cl.: B65G 33/04, B65G 47/51

(54) **HELIX-PUFFERFÖRDERER**

(71) Anmelder: cirkon GmbH, 67806 Rockenhausen (DE)
(72) Erfinder: Sittel, Jürgen, 67806 Rockenhausen (DE)
(74) Vertreter: Hoffmann Eitle

(57) **Zusammenfassung**

Um unter geringem Energieeinsatz Produkte schonend zu fördern und zu puffern, wird ein Pufferförderer vorgeschlagen mit einem zentralen, eine vertikale Längsachse aufweisenden Antriebskörper (3), der um die Längsachse drehbeweglich angetrieben ist, einer wendelförmig um den Antriebskörper herum angeordneten, stationären Bahn (5) zum Fördern und Puffern der Produkte (7), bei dem der Antriebskörper (3) ein Kreiszylinder mit einer im Bereich der wendelförmig um den Kreiszylinder herum angeordneten, stationären Bahn (5) streng rotationssymmetrischen im Wesentlichen die Form eines Kreiszylinders mit einer in Umfangsrichtung und Achsrichtung glatten Mantelfläche aufweist, und die Bahn (7) eine Profilschiene zum Abstützen der Produkte ist, die mit einem derartigen Abstand zur Mantelfläche angeordnet ist, dass eine Kippbewegung der Produkte hin zur Mantelfläche ermöglicht wird.

## Beschreibung

### TECHNISCHES GEBIET

Die vorliegende Erfindung betrifft einen Pufferförderer, der insbesondere in Produktions-, Verpackungs- und Abfüllanlagen zum Einsatz kommt. Ein Pufferförderer mit den Merkmalen aus dem Oberbegriff von Anspruch 1 ist aus der US 5, 070, 999 bekannt.

### STAND DER TECHNIK

Es sind bereits wendelförmige Förderer bekannt, die auch als Pufferspeicher zum Einsatz gekommen sind, zum Beispiel in Abfüllanlagen für Getränke, bei der Paketförderung und -kommissionierung und als Produktionsmittel zur Bereitstellung von Werkstücken oder Packgut. In der Regel kommen diese Förderer bei der Verkettung von Stationen zum Einsatz, um Geschwindigkeitsunterschiede zwischen stromaufwärts und stromabwärts des Förderers gelegenen Stationen auszugleichen. Eine weitere bereits bekannte Funktion ist der Ausgleich von Höhenunterschieden zwischen den Stationen.

So offenbart beispielsweise die US 2010/0140054 A1 einen Pufferspeicher, der entweder in der Produktion oder in der Lagerhaltung bzw. Kommissionierung von Paketen zum Einsatz kommt. Er weist ein Endlosförderband, oder alternativ hierzu eine Rollenbahn auf, die wendelförmig um eine zentrale, stationäre Säule verteilt ist. Das Förderband oder alternativ die Rollen der Rollenbahn werden angetrieben und fördern die auf ihnen getragenen Pakete.

Aus der EP 2 733 093 A1 ist ein Endlosketten- oder -bandförderer bekannt. Mit der wendelförmig um eine zentrale, stationäre Säule laufenden Kette bzw. dem so verlaufenden Band können zum Beispiel in einer Getränkeabfüllanlage die Deckel von Getränkebehältern zu den Behältern transportiert werden. In einem ähnlichen Einsatzbereich offenbart DE 10 2004 007 590 A1 eine Endloskette bzw. ein Endlosband oder alternativ hierzu Röllchen oder Greifelemente für die wendelförmige Förderung von Flaschen um eine stationäre, zentrale Säule. Auch die DE 11 20005 000 890 B4 offenbart Endlosförderbänder, die wendelförmig um eine zentrale, stationäre Säule verlaufen und in der Flaschenabfüllung zum Einsatz kommen.

Aus der DE 10 2007 005 994 A1 ist ein Schwerkraftförderer für Werkstückträger bekannt geworden. Dieser weist ein Doppelschienenpaar auf, das wendelförmig um eine zentrale, stationäre Säule verläuft. Die Doppelschienen des Paars sind radial auf Abstand zueinander angeordnet. Die Werkstückträger greifen mit Zapfen in den Zwischenraum der Doppelschienen und rutschen entlang der einen und auf der anderen Schiene jeder Doppelschiene schwerkraftgetrieben ab. Die Schwerkraftförderung kann gegebenenfalls mit einem Vibrationsgenerator unterstützt werden.

Die US 5, 070, 999 offenbart eine als wendelförmigen Förderer und Puffer für Wälzlager gedachte Konstruktion. Als Antriebskörper weist der Förderer eine zentrale, motorisch angetriebene Trommel mit einer Mantelfläche aus einem Material geringer Reibung auf. In der Mantelfläche befinden sich in Umfangsrichtung beabstandete, axial verlaufende Einsätze. Jeder Einsatz hat die Form eines U-Profils. Die Schenkel des U-Profils bilden in Umfangsrichtung beanstandete Kanten, deren radial äußeres Ende bündig mit der Mantelfläche der Trommel ist. Zwischen diesen Kanten wird eine relative zur Mantelfläche radial nach innen vertiefte Nut ausgebildet. Der Förderer weist ferner eine wendelförmig um die Mantelfläche der Trommel angeordnete, stationäre Schiene auf. Die Schiene ist in radialer Richtung von außen nach innen geneigt. Sie besteht aus einer Abfolge von miteinander verzahnten, flexiblen Kunststoffprofilen, ähnlich einer Flexilinkkette, und reicht nahezu bis an die Mantelfläche der Trommel. Die Wälzlager werden nahezu vollflächig auf der Schiene liegend gefördert, indem sie aufgrund der Neigung der Schiene nach innen auf Kontakt mit der Mantelfläche der Trommel rutschen und bei Drehung der Trommel um ihre Längsachse von den Einsätzen mitgenommen werden. Wenn die Konstruktion als Puffer genutzt werden soll, wird ein sogenanntes Tor geschlossen. Dieses Tor versperrt die Transportbahn für die Wälzlager. Die Trommel dreht sich weiter, sodass die Kanten an den Wälzlagern vorbei streichen.

Die bekannten Ketten- und Bandförderer haben einen nicht unbeträchtlichen Energiebedarf, um die mit zu fördernden Produkten beladene Kette bzw. das so beladene Band in einer Wendelform über mehrere Wendel hinweg anzutreiben. Mit dem bekannten Schwerkraftförderer lassen sich Höhenunterschiede nur "bergab" bewältigen, nicht aber "bergauf". Die aus US 5, 070, 999 bekannte Konstruktion weist diese Nachteile nicht auf, bringt aber sowohl in ihrem Betrieb als Förderer als auch als Puffer, bei dem sich hunderte der gepufferten Produkte stauen, erheblichen Druck auf die Produkte auf. Bei den Produkten handelt es sich um Wälzlager, die diesem Druck ohne Weiteres standhalten. Bei empfindlicheren Produkten würde ein Einsatz der aus US 5, 070, 999 bekannten Konstruktion aber zu Beschädigungen der Produkte führen.

### DARSTELLUNG DER ERFINDUNG

Die Erfindung spricht das technische Problem an, eine Konstruktion bereitzustellen, mit der unter geringem Energieeinsatz Produkte schonend gefördert und gepuffert werden können.

Dieses Problem wird gelöst durch einen Förderer mit den Merkmalen von Anspruch 1, mit einer Anordnung mit den Merkmalen von Anspruch 12 sowie ein Verfahren mit den Merkmalen von Anspruch 15. Vorteilhafte Weiterbildungen sind in den weiteren Ansprüchen angegeben.

Entsprechend der Angaben von Anspruch 1 umfasst der erfindungsgemäße Pufferförderer einen Antriebskörper, der im Wesentlichen die Form eines Kreiszylinders aufweist. Entsprechend der üblichen Verwendung in der Geometrie weist der Kreiszylinder anspruchsgemäß eine Achse auf, die vorliegend als Längsachse oder auch als Rotationsachse bezeichnet wird. Ebenfalls entsprechend der üblichen Verwendung in der Geometrie wird in der vorliegenden Beschreibung auf die Richtung entlang dieser Achse mit Längsrichtung oder Achsrichtung, auf die Richtung rund um den Umfang der Mantelfläche mit Umfangsrichtung und auf die Richtung von der Achse zur Mantelfläche mit Radialrichtung Bezug genommen.

Der anspruchsgemäße Kreiszylinder kann ein Hohl- oder ein Vollzylinder sein.

Anspruchsgemäß weist die Bahn des erfindungsgemäßen Pufferförderers eine Profilschiene auf, die objektiv zum Abstützen der Produkte geeignet ist. Das Abstützen wird vorliegend als Abgrenzung zum nahezu vollflächigen Aufliegen verstanden, wie es beispielsweise aus der vorstehend gewürdigten US 5, 070, 999 bekannt ist.

Die Erfindung nutzt bewusst das bloße Abstützen, also ein nicht nahezu vollflächiges Aufliegen, um eine Kippbewegung der zu fördernden und puffernden Produkte zu induzieren. Die Kippbewegung findet statt hin zur Mantelfläche des Kreiszylinders und bewirkt dort eine Anlage. Die Anlage wiederum steht im Reibschluss mit der Mantelfläche. Die Größe des Kippmoments bestimmt die Kraft der Anlage, die wiederum die Größe des Reibschlusses bestimmt. Durch die fachmännische Wahl verschiedener Parameter, was nachfolgend erläutert wird, gelingt es, die Reibkräfte so einzustellen, dass Produkte für ihre Förderung idealerweise durch Haftreibung aber zumindest mit wenig Schlupf mitgenommen werden und für ihre Pufferung Gleitreibung erfahren und so in ihrer Pufferposition verharren können. Zugleich lassen sich die Reibkräfte so fein justieren, dass auch empfindliche Produkte beschädigungsfrei sowohl gefördert als auch gepuffert werden können.

Erfindungsgemäß entwickelt das Kippmoment in Verbindung mit der Ausgestaltung der wendelförmigen Bahn derart geringe Kräfte, dass in Verbindung mit dem geringen Energiebedarf zum Antreiben des vertikalen Antriebskörpers insgesamt ein äußerst geringer Energieeinsatz pro gefördertem und gepuffertem Produkt und Wegstrecke erforderlich ist.

Als zu fördernde und puffernde Produkte kommen insbesondere, aber nicht ausschließlich, Behälter für Pharmazeutika wie Dosieraerosole, Anticholinergika, transmukosale Fentanyl-Präparate, oder Werkstückträger in Frage. Die Produkte sind bevorzugt zumindest dort rotationssymmetrisch, wo sie sich an der Profilschiene und der Mantelfläche des Kreiszylinder abstützen. Allerdings kommt die vorliegende Erfindung auch für Produkte anderer Geometrien infrage.

Bevorzugt weist der beanspruchte Pufferförderer einen Einlauf Bereich und einen Auslaufbereich auf, die in Längsrichtung oder Achsrichtung voneinander beabstandet sind. Dies ermöglicht dem einfacheren Anschluss an stromauf und stromab liegenden Stationen in der Produktion oder bei der Abfüllung bzw. Kommissionierung von Produkten. Um Einlaufbereich Auslaufbereich besonders Produkte schonend zu gestalten ist in diesem Zusammenhang bevorzugt vorgesehen, dass der Durchmesser des Kreiszylinders in zumindest einem dieser Bereiche verringert ist.

Der Einlaufbereich und/oder der Auslaufbereich können in Achsrichtung betrachtet in den Bereichen des Kreiszylinders liegen, was die Förderkapazität und die Pufferkapazität bei geringem Platzbedarf maximieren kann.

Um die Produkte der wendelförmigen Bahn möglichst schonend zuzuführen und sie ebenso schonend wieder auszuführen ist erfindungsgemäß bevorzugt weiter vorgesehen, dass in diesen Bereichen Bänder vorgesehen sind. Diese Bänder führen zu einer seitlichen Berührung der Produkte, die eine Fördererkraft ausübt und zugleich eine seitliche Führung gewährleistet.

Der Antrieb des erfindungsgemäß bereitgestellten Antriebskörpers wird bevorzugt umgesetzt, indem der Antriebskörper einen Hohlzylinder aufweist, in dem sich mindestens eine Antriebswelle befindet. Die Integration der Welle in dem Hohlzylinder ermöglicht eine möglichst platzsparende Anordnung mehrerer Pufferförderer übereinander.

Es ist ferner bevorzugt, dass die Profilschiene orthogonaler Parallelprojektion entlang der Längsachse betrachtet eine konzentrisch zur Mantelfläche angeordnete, kreisförmige Innenbahn aufweist. Anders formuliert ist der Abstand zwischen dem inneren Ende der Profilschiene und der Mantelfläche des Kreiszylinders über die Länge der Profilschiene hinweg konstant. Dies ermöglicht eine möglichst gleichmäßige Reibkraft entlang der Förderstrecke.

Gemäß den bevorzugten Ausführungsbeispielen ist der Querschnitt der Profilschiene, betrachtet in einem Längsschnitt der Wendelform durch die Längsachse, L-förmig. Die L-Form wird i.d.R. etwa 90° zwischen den Schenkeln aufweisen, kann aber von diesem Winkel abweichen. Die Schenkel sind i.d.R. geradlinig, können aber auch hiervon abweichen. Diese Form hat sich als ideal erwiesen, bei zuverlässiger seitlicher Führung ein möglichst gleichbleibendes Kippmoment zu erzeugen.

Der Reibkoeffizient der Mantelfläche lässt sich beeinflussen, indem man das Material der Mantelfläche variiert. Das Vorsehen einer Beschichtung zu diesem Zweck erlaubt ein solches Variieren. Es ist konstruktiv einfacher als z.B. die Neigung der Wendel anzupassen oder den Antriebskörper insgesamt tauschen zu müssen. Die Beschichtung kann ein Strumpf, eine Folie o.ä. sein.

Die erfindungsgemäße Anordnung nach Anspruch 12 kann so ausgeführt sein, dass die zwei Pufferförderer nebeneinander oder übereinander angeordnet sind. Wenn sie nebeneinander angeordnet sind, kann der in Förderrichtung stromauf liegende Pufferförderer bergauf und der in Förderrichtung stromab liegende Pufferförderer bergab fördern. Natürlich ist auch die umgekehrte Anordnung denkbar. Alternativ können sowohl der stromauf als auch der stromab liegende Förderer bergab fördern, zum Beispiel wenn große Höhenunterschiede zu bewältigen sind.

Wenn die zwei Pufferförderer übereinander angeordnet sind, können die Wendel ihrer wendelförmigen Bahnen gegenläufig oder gleichläufig sein; ggf. können Einrichtungen zum Blockieren der Förderung am Auslauf vorgesehen sein, um das Puffern von Produkten zu beschleunigen.

### KURZE BESCHREIBUNG DER ZEICHNUNGEN

In den beigefügten Zeichnungen, die rein beispielhaft und ohne den Umfang der vorliegenden Erfindung zu beschränken, Ausführungsbeispiele darstellen, zeigt
- Figur 1: eine perspektivische Ansicht auf einen Pufferförderer, bei dem eine der für die Befestigung der wendelförmigen Bahn vorgesehenen Strebe weggelassen wurde;
- Figur 2: eine perspektivische Ansicht auf einen nahezu baugleichen Pufferförderer, bei dem diese Strebe dargestellt ist und die Förderrichtung im Verhältnis zu dem Pufferförderer aus Figur 1 entgegengesetzt ist;
- Figur 3: eine perspektivische Detailansicht auf den Einlaufbereich des Pufferförderers aus Figur 1;
- Figur 4: eine perspektivische Ansicht im Längsschnitt und durch die Rotationsachse des Antriebskörpers mit einer ersten Ausführungsvariante der wendelförmigen Bahn und einem ersten beispielhaften Produkt;
- Figur 5: eine perspektivische Ansicht im Längsschnitt durch die Rotationsachse des Antriebskörpers mit einer zweiten Ausführungsvariante der wendelförmigen Bahn und einem zweiten beispielhaften Produkt;
- Figur 6: eine perspektivische Ansicht auf eine Anordnung von drei Pufferförderern, von denen zwei nebeneinander und zwei übereinander angeordnet sind, und die beiden übereinander angeordneten Pufferförderer im Längsschnitt dargestellt sind; und
- Figur 7: eine perspektivische Ansicht in anderem Winkel auf eine ungeschnittene Anordnung von drei Pufferförderern ähnlich Figur 6 ist.

### WEGE ZUR AUSFÜHRUNG DER ERFINDUNG

In den Figuren bezeichnen gleiche Bezugszeichen gleiche oder einander entsprechende Elemente. Ferner sind die einzelnen Elemente, auch wenn dies nicht ausdrücklich dargestellt ist, an eine Steuerung angeschlossen. Die Steuerung kann zentral oder dezentral sein und überwacht die Betätigung und die Bewegungen der einzelnen Elemente, so wie sie in den Figuren dargestellt sind und nachfolgend erläutert werden.

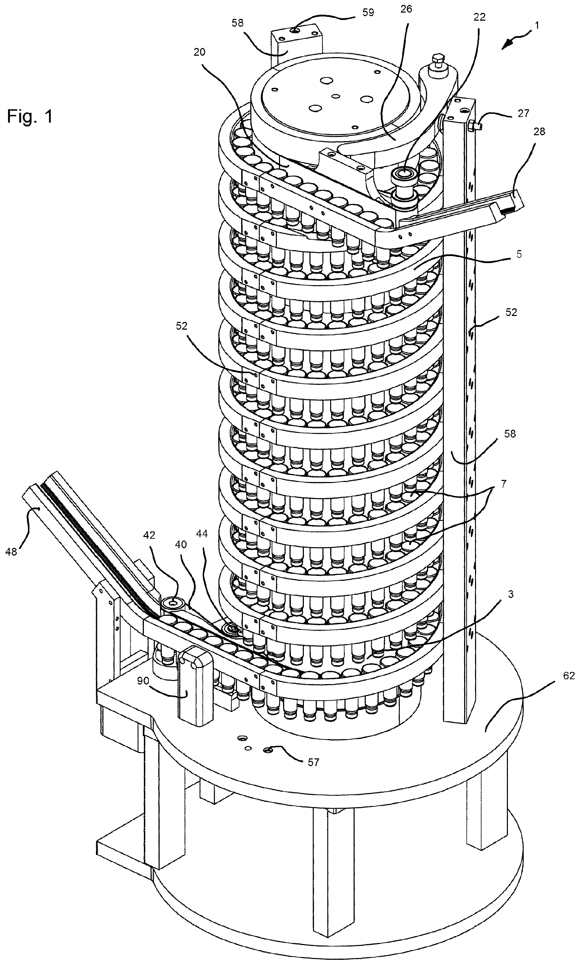

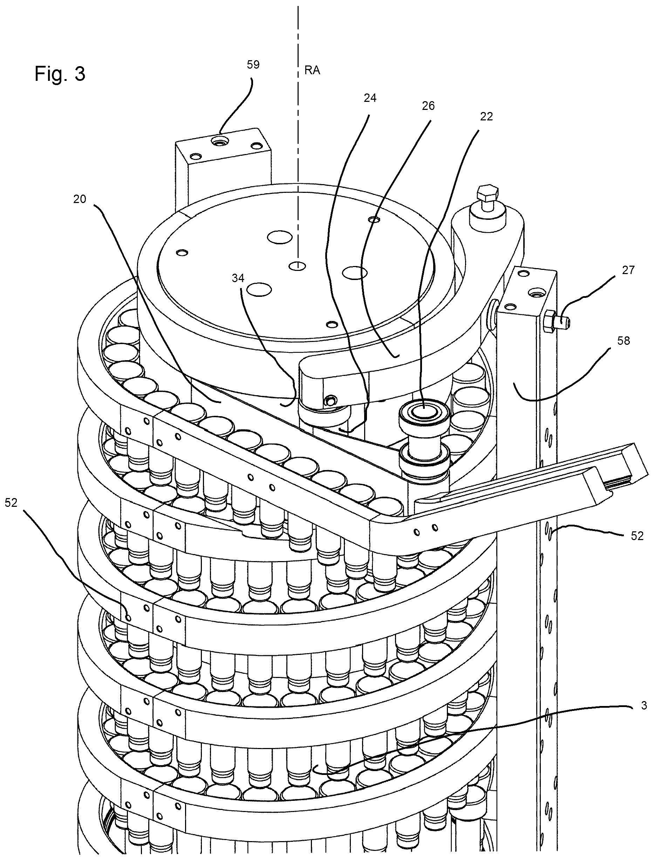

Figur 1 zeigt einen Pufferförderer 1. Er umfasst einen Antriebskörper 3, der um seine Längsachse, die auch als Rotationsachse RA bezeichnet ist (siehe Figuren 3, 4 und 5), drehbeweglich angetrieben ist. Der Antriebskörper kann an seiner Mantelfläche Durchmesser von etwa 100 mm bis etwa 800 mm, und Längen von etwa 100 mm bis etwa 3000 mm aufweisen, was rein beispielhaft und nicht beschränkend zu verstehen ist. Der Antriebskörper 3 steht senkrecht, d.h. seine Längsachse bzw. Rotationsachse RA verläuft vertikal. Um den Antriebskörper läuft eine stationäre, wendelförmige Bahn 5. Die mit 7 bezeichneten Produkte laufen in dem in Figur 1 dargestellten Pufferförderer oben ein, die wendelförmige Bahn herab und am axial unteren Ende aus der Bahn heraus.

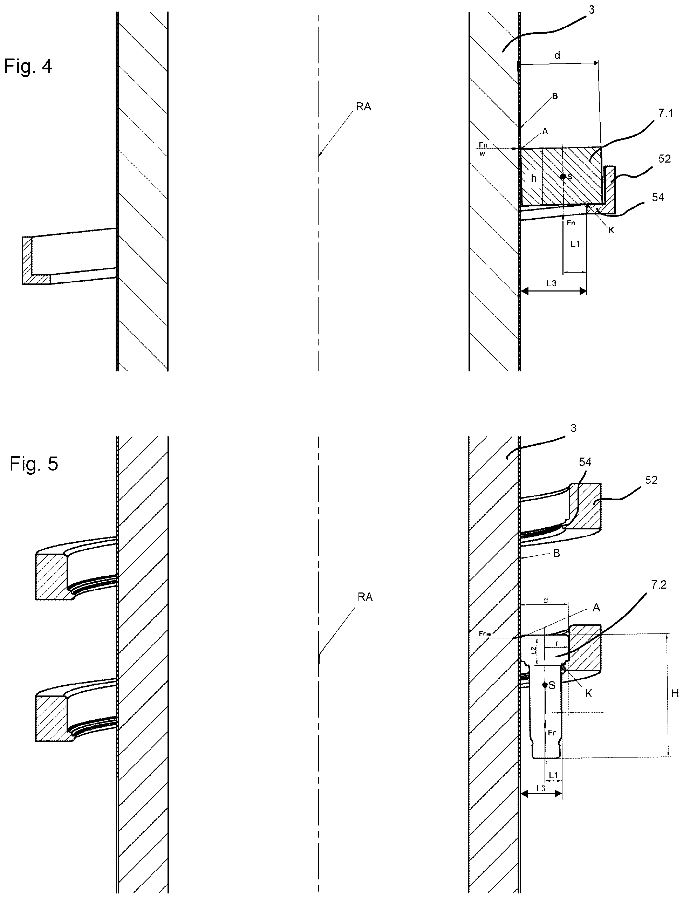

In den Figuren 1-3 sowie 5-7 sind gleichartige Produkte dargestellt. Der Pufferförderer und die mit ihm ausführbaren Verfahren sind allerdings nicht auf Produkte dieser Art beschränkt. So ist eines der alternativen Produkte in Figur 4 dargestellt. Ebenso ist in den Figuren 1-3 sowie 5-7 eine besondere Ausgestaltung der wendelförmigen Bahn gezeigt. Der Pufferförderer ist aber nicht auf diese Ausgestaltung beschränkt. Eine der ebenfalls möglichen, alternativen Ausgestaltungen ist entsprechend in Figur 4 dargestellt. Hierbei ist die Ausgestaltung der Bahn nach Figur 4 nicht auf Verwendung mit dem Produkt nach Figur 4 beschränkt, ebenso wenig wie die Ausgestaltung der Bahn nach den anderen Figuren nicht auf die Verwendung mit dem in diesen Figuren dargestellten Produkt beschränkt ist. So kann das Produkt aus Figur 4 auch mit den Bahnen aus den übrigen Figuren und das Produkt aus den übrigen Figuren auch mit der Bahn aus Figur 4 verwendet werden. Weitere, nicht in den Figuren dargestellte Kombinationen sind ebenso möglich.

Die in den Pufferförderer 1 einlaufenden Produkte werden von einer in Förderrichtung stromauf liegenden Station bei dem bei 28 dargestellten Einlauf an den Pufferförderer übergeben. Die Produkte laufen in zur Mantelfläche des Antriebskörper 3 tangentiale Richtung ein, was im dargestellten und bevorzugten Ausführungsbeispiel im oberen Axialendbereich des Antriebskörper stattfindet. Diese Lage ist aber nicht notwendig, denn die Lage des Einlaufs entlang der Rotationsachse RA kann variiert werden. Ferner ist, wie Figur 1 entnommen werden kann, der Einlauf aus zwei Elementen gleichen Querschnitts gebildet, die spiegelverkehrt zueinander und sich gegenüberliegend angeordnet sind. Dies ist bevorzugt, denn es verringert die Teilevielfalt und erleichtert somit die Konstruktion und die Herstellung, ist aber nicht notwendig. Wenn zumindest die Seite des Einlaufs, die nach seiner Fortsetzung als das erste kreisbogenförmige Segment der wendelförmigen Bahn 5 außen liegt, die gleiche Profilform aufweist wie die wendelförmigen Bahn kann ein störungsfreies Einlaufen der Produkte, z.B. stoßfrei und produktschonend, bereits gewährleistet werden.

Um den störungsfreien Einlauf der Produkte zu bewerkstelligen, ist in dem Einlaufbereich ein Endlosband 20 vorgesehen, was bei Umlenkrollen 22 und 24 (in Figur 1 nicht sichtbar, siehe stattdessen Figur 3) umgelenkt wird. Auf entsprechende Weise ist im unteren axialen Endbereich des Antriebskörper 3 ein Endlosband 40 vorgesehen, was bei Umlenkrollen 42 und 44 umgelenkt wird. Von dort werden die Produkte an einen Auslauf 48 übergeben, der die Produkte zu einem weiteren Transportmechanismus und letzten Endes einer stromab liegenden Station übergibt. Auch der Auslauf 48 ist bevorzugt aus zwei Elementen gleichen Querschnitts gebildet, die spiegelverkehrt zueinander und sich gegenüberliegend angeordnet sind. Die vorstehend für den Einlauf beschriebenen Kriterien und Vorteile gelten für den Auslauf analog.

Die Umlenkrolle 22 und/oder 42 kann mit einem eigenen Antrieb versehen sein, der dann auch den Antriebskörper 3 antreibt.

Die aus dem Pufferförderer 1 auslaufenden Produkte laufen in zur Mantelfläche des Antriebskörper 3 tangentiale Richtung aus, was im dargestellten und bevorzugten Ausführungsbeispiel im unteren Axialendbereich des Antriebskörper stattfindet. Diese Lage ist aber nicht notwendig, denn die Lage des Auslaufs entlang der Rotationsachse RA kann variiert werden.

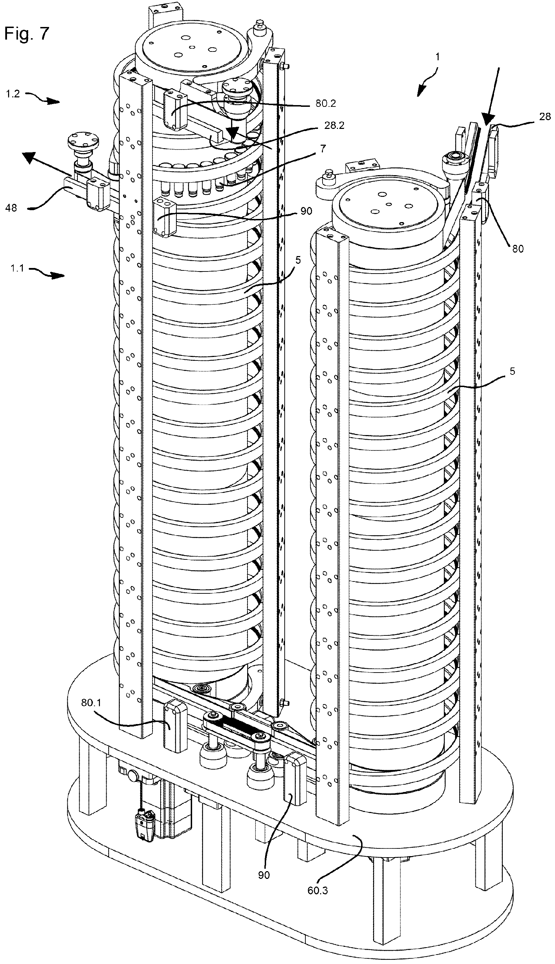

Im Bereich des Einlaufs ist ferner ein mit einer Verstellung 27 versehener Schwingenarm 26 erkennbar. Dieser Schwingenarm trägt die Umlenkrolle 24 (siehe Figur 3). In Zusammenwirken mit der Verstellung 27 ist es möglich, die Auslenkung des Schwingenarm zu verändern und somit die Bandspannung einzustellen. Im Auslaufbereich ist eine vergleichbare Verstellung vorgesehen (siehe auch Figur 7).

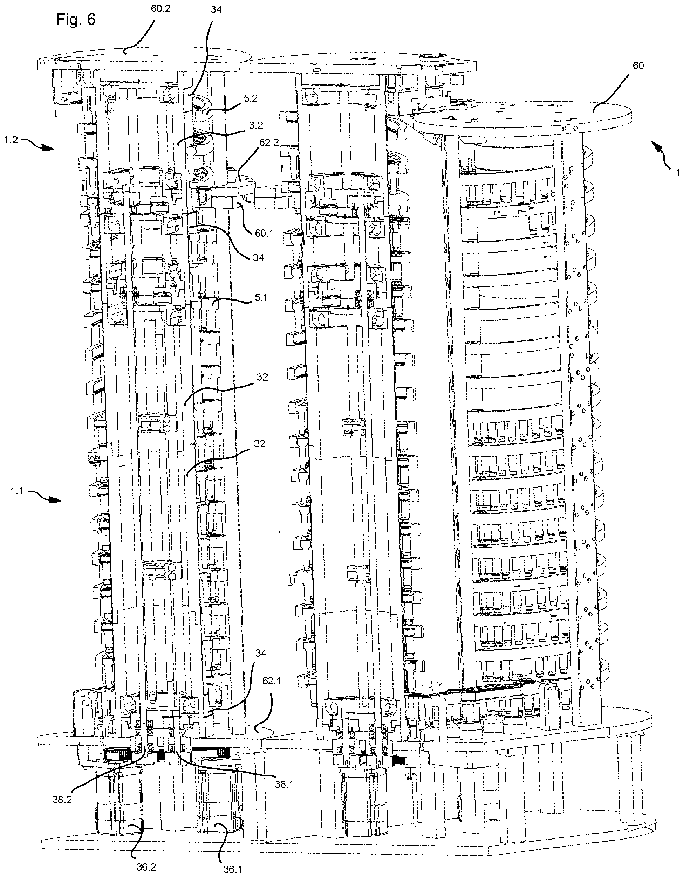

Wie Figur 1 entnehmbar ist, ist die wendelförmige Bahn 5 aus einzelnen Segmenten aufgebaut. Diese Segmente sind bei 52 mit Streben 58 verbunden. Die Streben 58 weisen an ihrem oberen Ende bei 59 Befestigungsmöglichkeiten für eine Kopfplatte 60 (siehe Figur 6) auf. Zur Verdeutlichung sind in Figur 1 von insgesamt drei Streben 58 nur zwei dargestellt, um die Stoßstelle benachbarter, die wendelförmige Bahn 5 ergebenden Segmente sichtbar zu machen. An ihrem unteren Ende sind die Streben 58 an einer Fußplatte 62 befestigt.

In den Figuren sind durchweg drei regelmäßig um den Umfang der wendelförmigen Bahnen verteilte Streben 58 gezeigt, so dass die Segmente der wendelförmigen Bahnen sich über 120° des Umfangs erstrecken. Die Erfindung ist selbstredend weder auf diese Anzahl noch auf diese Anordnung beschränkt.

Der grundsätzliche Aufbau hingegen ermöglicht es auf vorteilhafte Weise, die gesamte Einheit aus Kopfplatte 60, Streben 58 und wendelförmiger Bahn 5 nach Lösen am Einlauf 28, am Auslauf 48 und an der Fußplatte 62 (bei 57, siehe Figur 1) nach oben abzuheben. So kann gegebenenfalls zur Anpassung auf das Fördern von Produkten mit anderen Abmessungen eine entsprechend angepasste Einheit aus Kopfplatte, Streben und wendelförmiger Bahn über den Antriebskörper gestülpt und mit der Fußplatte 62 verbunden werden.

Figur 1 zeigt ferner bei 90 schematisch eine Einrichtung, mit der die Förderbahn bzw. der Förderpfad blockiert werden kann. Im einfachsten Fall umfasst die Einrichtung einen Aktuator, der durch eine Bohrung in dem aufrechten Schenkel des L-Profils einen Stift in die Förderbahn bzw. der Förderpfad treibt, so dass Produkte daran gehindert werden, den Stift zu passieren. Es sind aber auch zahlreiche andere Einrichtungen denkbar, die das weitere Fördern von Produkten unterbinden, obwohl sich der Antriebskörper dreht. Nicht zuletzt wäre es alterativ möglich, den Antrieb des Antriebskörpers abzuschalten.

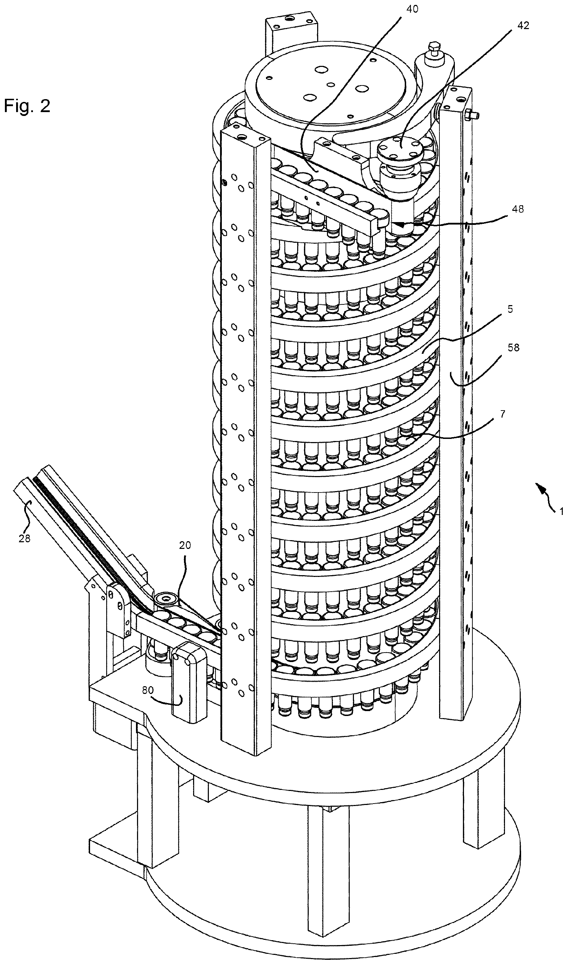

In Figur 1 laufen die Produkte im oberen Endbereich in den Pufferförderer ein, entlang der wendelförmigen Bahn und im unteren Endbereich aus ihm aus. Die Förderrichtung ist hier also von oben nach unten oder bergab. In Figur 2 ist die umgekehrte Förderrichtung dargestellt. Dort befindet sich der Einlauf 28 axial unteren Endbereich und der Auslauf 48 im axial oberen Endbereich des Pufferförderers. Wie auch in Figur 1 ist es aber auch bei der umgekehrten Förderrichtung möglich, d. h. von unten nach oben bzw. bergauf, den Einlauf und/oder den Auslauf nicht an den axialen Endbereichen sondern irgendwo entlang der Länge zu platzieren. Ebenso wie für die Ausführung nach Figur 1 gilt auch für der der Figur 2, dass die Anzahl und Anordnung der Streben und die sich ergebende Länge der Segmente der wendelförmigen Bahn nicht auf die zeichnerisch dargestellte Variante beschränkt ist. Figur 2 zeigt ferner bei 80 schematisch eine Kamera, die durch eine Bohrung in dem aufrechten Schenkel des L- Profils passierende Produkte erfasst.

In den Figuren 1-3 und teilweise 6 und 7, sind aneinander anliegende Produkte 7 gezeigt. Dies bedeutet, dass der Pufferförderer 1 gefüllt ist. Seine Kapazität an aufgenommen Produkten ist erschöpft. Im Betrieb des Pufferförderers 1 ist dies nicht immer der Fall, wie nachfolgend bei der Beschreibung des Verfahrens deutlich werden wird.

Die wendelförmige Bahn läuft mit einem gleichbleibenden Abstand um die Mantelfläche des Antriebskörper 3; der Abstand ist in den Figuren 4 und 5 mit L3 gekennzeichnet. Dies bedeutet, dass die Innenseite der Bahn "von oben" oder "von unten" betrachtet, d. h. in einer orthogonalen Parallelprojektion entlang der Längs- bzw. Rotationsachse RA, kreisförmig ist. Dieser Kreis ist konzentrisch zur Mantelfläche des Antriebskörper 3.

In Figur 3 ist bei 3 der Antriebskörper gezeigt, hier in Form eines Hohlzylinders. Die Form eines Hohlzylinders hat sich für innenliegende Antriebe bewährt, die alternativ und bevorzugt zu anderen Antrieben, wie z.B. der ggf. angetriebenen Umlenkrolle 22 oder 42, bereitgestellt werden. Vollzylinder sind aber durchaus denkbar, auch in Verbindung mit einem Antrieb über Wellen, sofern der Antrieb axial über oder unter dem Antriebskörper platziert wird.

Auf der Mantelfläche ist bei B eine Beschichtung gezeigt. Diese Beschichtung ist hinsichtlich ihres Reibkoeffizienten abgestellt auf Gewicht, Form und Abmessungen des zu fördernden und puffernden Produkts. Bei dem Material der Beschichtung kann es sich beispielsweise um das Material des von der Firma Chiorino® unter dem Kode NA-77 und dem Typ EL2-U10 W verfügbaren Prozess- und Förderbands handeln. Dieses Band ist aus Polyurethan (TPU) mit einem Reibwert-Index LF auf seiner den Produkten zugewandten Seite. Dieses Material eignet sich nicht nur für die Bänder 20 und 40, sondern auch, gegebenenfalls in angepasster Dicke, für die Beschichtung B des Antriebskörpers 3.

Der Antriebskörper muss aber nicht beschichtet sein. So hat sich herausgestellt, dass für bestimmte Produkte durch Eloxieren einer Aluminiumwalze als Antriebskörper 3 erzeugen Mantelfläche einen ausreichenden Reibkoeffizienten aufweist. So kann zum Beispiel durch eine hartanodische Oxidation von Reinaluminium eine zwischen etwa 10 µm und 25 µm dicke Schicht mit einer Aufrauung Rₐ = 0,1 µm ... 0,2 µm erzeugt werden, deren im Gleitversuch mit Stift-Scheibe-Tribometer ermittelte Reibungszahl durchschnittlich 0,73 (Stift 100Cr6; Scheibe EN AW-6082, AlSl1MgMn; F_{N} = 5 N, v = 6 m/min über 9000 Umdrehungen) beträgt.

In Figur 4 ist bei 7.1 als zu förderndes Produkt schematisch ein Werkstückträger dargestellt, wie er in verketteten Prozessen der Produktion zum Einsatz kommt. Der Werkstückträger kann in der Draufsicht kreisförmig sein, mit einem Durchmesser d. Je nach Gewicht und Oberflächenbeschaffenheit der zu fördernden und puffernden Produkte ist es mit dem erfindungsgemäßen Pufferförderer jedoch auch möglich, in der Draufsicht polygonale Produkte zu fördern und puffern. Entsprechend kann es sich bei dem in Figur 4 dargestellten Produkt auch um einen in der Draufsicht rechteckigen Werkstückträger 7.1 mit einer Breite d handeln. Die Höhe des Werkstückträgers ist mit h bezeichnet. Seine Schwerpunktelage ist bei S eingezeichnet.

Aus Figur 4 geht ebenfalls hervor, dass in der dort gezeigten Ansicht, d. h. einem Längsschnitt durch die Längsachse bzw. Rotationsachse RA des Antriebskörpers 3 der Querschnitt der wendelförmigen Bahn L-förmig ist. Das L weist einen aufrechten Schenkel 52 und einen liegenden Schenkel 54 auf. Im dargestellten Ausführungsbeispiel stehen diese Schenkel rechtwinklig aufeinander. Dies ist aber im Rahmen der vorliegenden Erfindung nicht notwendig, andere Winkel sind ebenfalls denkbar. Es sind auch andere Profilformen denkbar, solange ein Teil des Profils, im gezeigten Ausführungsbeispiel der liegende Schenkel 54, eine Auflage für die Produkte 7 und ein Teil des Profils, im gezeigten Ausführungsbeispiel der aufrechte Schenkel 52, eine Seitenführung für die Produkte bietet. In einer abgewandelten Lösung kann die wendelförmige Bahn ein kreisförmiges Profil aufweisen.

In den gezeigten Ausführungsbeispielen weist das radial innen liegende Ende des liegenden Schenkels 54 einen Abstand L3 von der Mantelfläche des Antriebskörpers 3 auf. Seine in Richtung der Rotationsachse RA oben liegende Kante bildet eine Kontaktlinie, die bei rotationssymmetrischen Körpern als Kontaktpunkt ausgebildet und entsprechend im Schnitt der Figuren 4 und 5 als Kontaktpunkt K erkennbar ist. Bei Körpern, die in der Draufsicht der Figuren 5 und 5 rechteckig sind, ergeben sich zwei Kontaktpunkte, von denen in Figur 4 der hintere hinter der Schnittebene dargestellt ist. Die an dem Schwerpunkt S angreifende Gewichtskraft FN führt nun dazu, dass das Produkt 7 um den Kontaktpunkt K bzw. um die durch die Kontaktpunkte K verlaufende Achse kippt und sich an die Mantelfläche des Antriebskörper 3 anlehnt. Der Anlagepunkt ist in Figur 4 mit A gekennzeichnet. Dabei entwickelt die Gewichtskraft in Zusammenwirken mit den der Zeichnung entnehmbaren Hebelarmen ein Kippmoment. Der Betrag des Kippmoments und mithin der Reibschluss zwischen zu fördernden und zu puffernden Produkten einerseits und der Mantelfläche des Antriebskörpers andererseits hängt also vom Gewicht des Produkts, dem Abstand L1 des Schwerpunkts S zum Kontaktpunkt K in Radialrichtung, und von der Lage des Schwerpunkts S entlang der Höhe h ab. Durch Variation der Geometrie der wendelförmigen Bahn sowie Durchmesser des Antriebskörpers und des Reibkoeffizienten der Mantelfläche des Antriebskörpers lässt sich der erfindungsgemäße Pufferförderer auf eine Vielzahl von zu fördernden und puffernden Produkten 7 anpassen.

Figur 5 zeigt eine alternative Form des Querschnitts der wendelförmigen Bahn 5. Auch in Figur 5 ist mit 52 ein aufrechter und mit 54 ein liegender Schenkel einer Profilform gezeigt, die im wesentlichen L-förmig ist. Sowohl in Figur 4 als auch in Figur 5 ist gezeigt, dass der aufrechte Schenkel 52 in Radialrichtung außen liegt. Je nach Geometrie der zu fördernden Produkte sind aber auch andere Anordnungen denkbar.

Figur 5 ist ferner als zu förderndes und pufferndes Produkt 7 ein Behälter für Pharmazeutika mit angeflanschtem Zählwerk entnehmbar, wobei Behälter und Zählwerk insgesamt mit 7.2 bezeichnet sind. Sowohl das Zählwerk als auch der Behälter sind in der Draufsicht kreisförmig. Wie in der Figur 4 sind auch in Figur 5 die Lage des Schwerpunkts S, der Kontakt zwischen Zählwerk und liegendem Schenkel 54 bei K, sowie bei A der Punkt eingezeichnet, wo die obere Kante des Zählwerks an dem Antriebskörper 3 anliegt. d bezeichnet den Durchmesser, r den Radius des Zählwerks, und h seine Höhe. Figur 5 illustriert, dass die zu fördernden Produkte 7 nicht in ihrer Gesamtheit auf dem liegenden Schenkel 54 aufliegen müssen, so dass sich der Schwerpunkt S über dem liegenden Schenkel befindet. Die zu fördernden und puffernden Produkte können vielmehr auch durch den Abstand zwischen dem liegenden Schenkel 52 und der Mantelfläche des Antriebskörper durchreichen. Es sind also Schwerpunktlagen über, im, oder unter dem Kontaktpunkt denkbar und zwar sowohl für rotationssymmetrische als auch nicht rotationssymmetrische Produkte.

Der Fördermechanismus des Pufferförderers nutzt das somit variierbare Kippmoment. Bei Drehung des Antriebskörpers 3 führt die sich aus Kippmoment und Werkstoffpaarung ergebende Reibkraft dazu, dass in der Draufsicht runde Produkte zu rollen beginnen und in einer abrollenden Bewegung entlang der wendelförmigen Bahn gefördert werden. In der Draufsicht eckige Produkte haften am Anlagepunkt A und werden mitgenommen. Das Kippmoment ist ausreichend hoch, um Haftreibung zu gewährleisten. Im Pufferbetrieb ist die Reibkraft ausreichend niedrig, um ein Durchrutschen der Antriebswalze an dem Auflagepunkt, also einen Übergang von Haftreibung zu Geleitreibung zu ermöglichen.

Bei der in Figur 5 gezeigten Ausführung des Produkts 7 mit einem Durchmesser des Zählwerks von d = 25 mm ... 26 mm, d.h. einer radialen Entfernung des Schwerpunkts vom Kipppunkt K von etwa 12,5-13 mm, einer Höhe von h ≈ 16 mm und einem Gewicht von etwa 65 g lässt sich mit einem Durchmesser des Antriebskörpers an der Mantelfläche von etwa 220 mm und bei einer Drehgeschwindigkeit des Antriebskörpers von etwa (40 min-1) ein Durchsatz bis etwa 400 Produkte pro Minute erzielen.

Figur 6 zeigt eine Anordnung aus drei Pufferförderern 1. Der in Figur 6 rechts dargestellt Pufferförderer entspricht dem in Figur 1 dargestellten Beispiel, mit einem oberen Einlauf und einem unteren Auslauf. Im unteren Endbereich übergibt der rechte Pufferförderer Produkte an den in Figur 6 links unten geschnitten dargestellten Pufferförderer. Die Schnittansicht in Figur 6 links ist so gewählt, dass der Schnitt in Längsrichtung durch die Rotationsachse geführt wurde und dann die im ungeschnitten Zustand vordere Hälfte nach links aufgeklappt wurde. Aus der Schnittansicht ergibt sich, dass auf den links unten dargestellten Pufferförderer, hier mit 1.1 bezeichnet, ein weiterer Pufferförderer aufgesetzt ist, der hier mit 1.2 bezeichnet ist.

Der Antriebskörper des Pufferförderers 1.1 ist wiederum als Hohlzylinder ausgeführt. Im vorliegenden Beispiel ist der Hohlzylinder aus Segmenten 32 zusammengesetzt. Dieser Aufbau aus Segmenten ist vorteilhaft für die Fertigung. Er ist aber für die Ausführung der Erfindung nicht notwendig, da auch einstückige Ausführungen möglich sind. Der Antriebskörper des Pufferförderers 1.2 ist als einteiliger Hohlzylinder ausgeführt und in Figur 6 mit 3.2 bezeichnet.

Figur 6 ist ferner entnehmbar, dass der Durchmesser des Antriebskörpers nicht über seine gesamte Länge konstant ist. Z.B. sind in seinem Einlaufbereich und in seinem Auslaufbereich, die hier wiederum in der Nähe seiner axialen Enden angeordnet sind, ohne den Umfang der Erfindung diesbezüglich begrenzen zu wollen, weist der Antriebskörper Durchmesserverkleinerungen 34 auf. Bei 34 (siehe auch Figur 3) ist der Außendurchmesser um etwa die Dicke der Bänder 20, 40 verkleinert, so dass der unter Hinzufügen der Banddicke gemessene Außendurchmesser annähernd gleich ist zu dem Außendurchmesser des Antriebskörpers zwischen den Bändern. Dies gewährleistet eine ruckelfreie Aufnahme bzw. Ausgabe der Produkte in den bzw. aus dem Pufferförderer. Zudem sind die Durchmesserverkleinerungen leicht ballig ausgeführt, um eine konstante und zuverlässige Bandführung zu gewährleisten, wie dem Fachmann geläufig sein wird.

Bei 36.1 und 36.2 sind in Figur 6 Antriebsmotoren dargestellt, die an ihrem oberen Ende mit einer Zahnscheibe in je einen Zahnriemen eingreifen. Im Ausführungsbeispiel handelt es sich um Elektromotoren, bevorzugt Schrittmotoren. Allerdings sind auch andere Antriebsformen, etwa Direktantriebe, oder aus anderen Leistungsquellen gespeiste Antriebe denkbar. Die Motoren ermöglichen es, dass der Antriebskörper Geschwindigkeiten von etwa 1 min⁻¹ bis etwa 200 min⁻¹ entwickelt. Die Geschwindigkeiten müssen nicht konstant sein, vielmehr wird es im Betrieb regelmäßig dazu kommen, dass die Geschwindigkeiten variiert werden, zum Beispiel um auf Fluktuationen im Durchsatz der stromauf und/oder stromab liegenden Stationen zu reagieren.

Das andere Ende des Zahnriemens umschlingt eine Zahnscheibe, die an einem axial unteren Ende einer Königswelle sitzt. Das axial obere Ende dieser Königswelle trägt ein Planetenrad, was in ein am Innenumfang des Antriebskörper angeordnetes Sonnenrad eingreift. In den Figuren bezeichnet 36.1 den Motor für den Antrieb des Pufferspeichers 1.1. Das Bezugszeichen 36.2 bezeichnet den Motor für den Pufferspeicher 1.2. Entsprechend bezeichnet 38.1 die Königswelle für den Pufferspeicher 1.1. Dies ist der unten liegende Pufferspeicher. Entsprechend ist die Königswelle kurz. Bezugszeichen 38.2 bezeichnet die Königswelle für den Pufferspeicher 1.2. Sie ist entsprechend länger. Sie ist durchgeführt durch die Kopfplatte 60.1 des Pufferspeichers 1.1 und reicht durch die an Kopfplatte 60.1 angeflanschte Fußplatte 62.2 des Pufferspeichers 1.2 hindurch und dient dort in vergleichbarer Planeten-/Sonnradkonstruktion zum Antrieb des Pufferförderers 1.2. Auf diese Weise ist gewährleistet, dass die axial aufeinander angeordneten Pufferspeicher 1.1 und 1.2 unabhängig voneinander angetrieben werden können.

Dieser Antrieb ist synchron und gleichsinnig möglich, es kann aber auch ein gegenläufiger Antrieb vorgesehen sein. Entsprechend ist es möglich, die Wendel der wendelförmigen Bahn 5.1 für den Pufferförderer 1.1 gleichläufig oder auch gegenläufig zur Wendel 5.2 des Pufferförderers 1.2 auszugestalten.

Die Anordnung von zwei Pufferspeichern übereinander kann man ebenso als in Achsrichtung nebeneinander bezeichnen. Für die Zwecke der vorliegenden Beschreibung wird allerdings die Terminologie übereinander verwendet. Entsprechend wird die Anordnung von zwei Pufferspeichern, deren Rotationsachsen nicht auf einer gemeinsamen Geraden liegen, als nebeneinander bezeichnet.

Die soeben geschilderte Ausgestaltung des Antriebs ist nicht auf die Anordnung von zwei Pufferspeichern übereinander beschränkt. Sie eignet sich vielmehr auch für einen einzelnen Pufferspeicher. Weder die Anordnung von zwei Pufferspeichern übereinander noch ein einzelner Pufferspeicher ist auf die Art des Antriebs beschränkt. Andere, dem Fachmann geläufige Antriebe sind ebenfalls denkbar.

Figur 7 zeigt eine Anordnung von drei Pufferspeichern, wobei die Pufferspeicher 1 und 1.1 nebeneinander, und bevorzugt achsparallel zueinander, auf einer gemeinsame Fußplatte 60.3 angeordnet sind, und Pufferspeicher 1.2 über dem Pufferspeicher 1.1 angeordnet ist. Bei der Anordnung von Pufferspeichern nebeneinander ist die Erfindung jedoch weder auf eine gemeinsame Fußplatte beschränkt, auch wenn dies dabei hilft, Fertigungstoleranzen auszugleichen, noch auf die Anzahl zwei. Es sind auch Verkettungen von mehr als zwei Pufferspeichern denkbar. Auch ist bei einer Anordnung von Pufferspeichern nebeneinander das zusätzliche Vorsehen eines Pufferspeichers über einem oder mehreren der nebeneinander angeordneten Pufferspeicher, wie zum Beispiel 1.2 über 1.1 in Figur 7, optional.

Auch in Figur 7 sind Kameras 80 für den Pufferspeicher 1 bzw. 80.1 und 80.2 für die Pufferspeicher 1.1 und 1.2 entnehmbar. Pufferspeicher 1 und 1.1 sind in Figur 7 leer dargestellt. Sie enthalten also keine Produkte. Die einzigen in Figur 7 dargestellten Produkte 7 befinden sich im Pufferspeicher 1.2, was die Möglichkeit einer besonderen Verfahrensweise beim Betrieb der Anordnung von Pufferspeicher übereinander illustriert, die nachfolgend beschrieben wird.

Wege zur Ausführung des erfindungsgemäßen Verfahrens werden nachfolgend beschrieben. Nachdem es optional ist, über einen der nebeneinander angeordneten Pufferspeicher einen weiteren Pufferspeicher anzuordnen, wird zunächst eine Verfahrensweise unter Verwendung von lediglich den Pufferspeicher 1 und 1.1 aus Figur 7 erläutert.

Wie bereits erläutert wurde, empfangen die Pufferförderer von einer in Förderrichtung stromauf liegenden Station Produkte. Diese Produkte treten bei 28 in den Pufferförderer 1 ein, was vorliegend durch einen Pfeil verdeutlicht wurde. Bei 48 treten sie aus dem Pufferförderer 1.1 aus und werden an eine nachfolgende Station übergeben. Auch hier verdeutlicht ein Pfeil den Austritt. Im eingeschwungenen Zustand der Produktion oder - je nach Einsatzgebiet Kommissionierung o.dgl. - sind die stromauf liegende und die stromab liegende Station hinsichtlich ihres Durchsatzes bzw. ihrer Produktionsmenge synchronisiert. In diesem Fall wird eine Pufferung nicht benötigt. Es kann aber zu Ausfällen kommen. Fällt die stromauf liegenden Station aus, werden bei 28 vorübergehend keine Produkte mehr eintreten. In diesem Fall ist es wünschenswert, dass die stromab liegende Station weiterarbeiten und sich zu diesem Zweck aus dem Pufferspeicher 1.1 bedienen kann. Um dies zu ermöglichen wird bei Inbetriebnahme zunächst der stromab liegende Pufferförderer 1.1 gefüllt. Erst nach Füllen dieses Pufferförderers 1.1 ist der eingeschwungene Zustand der Produktion, Kommissionierung etc. erreicht.

Um das Füllen des Pufferförderers 1.1 zu ermöglichen stößt die stromauf liegende Station Produkte aus. Der Abstand der Produkte wird von der Geschwindigkeit und der Taktung der stromauf liegenden Station bestimmt. Mit diesem Abstand laufen die Produkte bei 28 in den Pufferförderer 1 ein. Sollte der Abstand zu klein sein, kann der Antriebskörper 3 mit einer derart hohen Geschwindigkeit betrieben werden, dass sich der Abstand der Produkte in der wendelförmigen Bahn im Verhältnis zum Abstand im Einlauf 28 vergrößert. Sollte der Abstand zu groß sein, kann der Antriebskörper 3 mit einer derart niedrigen Geschwindigkeit angetrieben werden, dass sich der Abstand der Produkte in der wendelförmigen Bahn im Verhältnis zum Abstand im Einlauf 28 verkleinert.

Mit dem derart eingestellten Abstand rutschen oder rollen die aufgenommenen Produkte nun die wendelförmige Bahn 5 des Pufferförderers 1 entlang, in dem in Figur 7 dargestellten und nicht beschränkenden Fall bergab. Der Pufferförderer 1 übergibt sie dem Pufferförderer 1.1, in dem die Produkte die wendelförmige Bahn 5 entlang rollen oder rutschen, vorliegend und wiederum nicht beschränkenden bergauf. Im Bereich des Auslaufs 48 aus dem Pufferförderer 1.1 sitzt Einrichtung 90, die es ermöglicht, den Transport- bzw. Förderweg entlang der wendelförmigen Bahn 5 zu blockieren. Zur Aufnahme des Betriebs wird bevorzugt der Transport- bzw. Förderweg blockiert, was verhindert, dass die Produkte aus dem Pufferförderer 1.1 austreten können. Alternativ könnte der stromab liegende Pufferspeicher zunächst langsamer, dann gar nicht mehr angetrieben werden, so dass ein Austreten von Produkten verhindert ist. Ergebnis ist jeweils, dass die aufgenommenen und durch den Pufferförderer 1 geförderten Produkte sich nach und nach im Pufferförderer 1.1 aufstauen. Bei einer ausreichenden Anzahl aufgestauter Produkte befinden sich somit im Pufferförderer 1.1 deutlich mehr Produkte als im Pufferförderer 1, in dem die Produkte noch auf Abstand verbleiben. Sobald der Pufferförderer 1.1 ausreichend gefüllt ist, wird der Austritt von Produkten aus dem Pufferförderer 1.1 ermöglicht, bevorzugt, indem die Einrichtung 90 den Transport- bzw. Förderweg freigibt. Die stromab liegende Station kann sich dann aus dem Pufferförderer 1.1 bedienen, aus dem die Produkte bei 48 mit derselben Geschwindigkeit und Frequenz austreten, wie sie bei 28 in den Pufferförderer 1 eintreten. Der eingeschwungene Zustand, in dem der stromab liegende Pufferförderer gefüllt ist, und der stromauf liegende Pufferförderer noch Füllkapazität hat, ist erreicht.

Fällt nun die stromauf liegende Station aus, kann die stromab liegende Station weiterarbeiten, bis die Pufferkapazität des Pufferspeichers 1.1 erschöpft ist. In dieser Zeit können sich die Antriebskörper 3 beider Pufferspeicher weiterdrehen. Es ist auch möglich, den Antriebskörper des Pufferspeichers 1 vorübergehend anzuhalten. Fällt ausgehend von dem eingeschwungenen Zustand die stromab liegende Station aus, kann die stromauf liegende Station solange weiterarbeiten, wie die sich im Pufferspeicher 1 befindenden Produkte noch Abstand zueinander aufweisen. Sobald die Produkte auch im Pufferförderer 1 aneinander anliegen, ist die Kapazität der Anordnung aus Pufferförderern 1 und 1.1 erreicht.

Beim Einlauf in die Pufferförderer ist es möglich, die einlaufenden Produkte zu erfassen und auszuwerten, bevorzugt optisch. Zu diesem Zweck lesen Gräte, bevorzugt Kameras 80, auf den Produkten angebrachte Kennzeichen, beispielsweise Aufdrucke, Streifencodes, QR-Codes oder dergleichen. Es ist ebenfalls möglich, RFID-Tags zu erfassen. Auf diese Weise ist es möglich, fehlerhafte Produkte und/oder Fremdprodukte zu erkennen, selbst wenn diese in ihren Abmessungen und ihrem Gewicht identisch zu den eigentlich zu fördernden und puffernden Produkten sein sollten. Die Steuerung des Prozesses ermöglicht es nun, den Durchlauf fehlerhafte Produkte und/oder Fremdprodukte durch den Pufferspeicher 1 und den Pufferspeicher 1.1 zu überwachen.

Durch das Vorsehen von Schleusen oder dergleichen ist es dann möglich, diese Produkte aus der Linie aus- und in den Pufferförderer 1.1 einzuschleusen, und zwar unabhängig von der soeben beschriebenen Vorgehensweise. Zum Zweck des Ausschleusens von Produkten aus der Linie ist es vorteilhaft, aber nicht unbedingt erforderlich, dass der Pufferförderer 1.2 (anders als in Figur 7 dargestellt) eine gleichsinnig zur Wendel der wendelförmigen Bahn des Pufferförderers 1.1 verlaufende, wendelförmige Bahn aufweist. Dann würden auch die Antriebskörper der Pufferförderer 1.1 und 1.2 gleichsinnig angetrieben.

Die (in Figur 7 dargestellte) gegenläufigen Wendeln der wendelförmigen Bahnen der Pufferspeicher 1.1 und 1.2 eignen sich besonders für das Einschleusen zusätzlicher Produkte in die Linie. Diese können beim Einlauf 28.2 händisch oder von einer anderen Station in den Pufferförderer 1.2 eingeführt werden. Beim Einschleusen in die Linie, was wiederum durch einen Pfeil verdeutlicht ist, ist lediglich darauf zu achten, dass beim Einmünden der wendelförmigen Bahn des Pufferförderers 1.2 in die wendelförmige Bahn des Pufferförderers 1.1 eine Kollisionsüberwachung stattfindet, wie dem Fachmann geläufig sein wird.

Im Rahmen der Erfindung ist es schließlich ebenso möglich, den Pufferförderer 1.2 über dem Pufferförderer 1 statt über dem Pufferförderer 1.1 anzuordnen, nur zwei übereinander und keine nebeneinander angeordnete, oder bloß nebeneinander und keine übereinander angeordnete Pufferförderer zu verwenden.

## Patentansprüche

1. Pufferförderer für Produkte mit
- einem zentralen, eine vertikale Längsachse aufweisenden Antriebskörper (3), der um die Längsachse drehbeweglich angetrieben ist, und
- einer wendelförmig um den Antriebskörper herum angeordneten, stationären Bahn (5) zum Fördern und Puffern der Produkte (7);
**dadurch gekennzeichnet, dass**
- der Antriebskörper (3) im Bereich der wendelförmig um den Kreiszylinder herum angeordneten, stationären Bahn (5) im Wesentlichen die Form eines Kreiszylinders mit einer in Umfangsrichtung und Achsrichtung glatten Mantelfläche aufweist, und
- die Bahn (7) eine Profilschiene zum Abstützen der Produkte ist, die mit einem derartigen Abstand zur Mantelfläche angeordnet ist, dass eine Kippbewegung der Produkte hin zur Mantelfläche ermöglicht wird.

2. Pufferförderer nach Anspruch 1, **dadurch gekennzeichnet, dass** er einen Einlaufbereich und einen in Längsrichtung vom Einlaufbereich beabstandeten Auslaufbereich für die Produkte aufweist.

3. Pufferförderer nach Anspruch 2, **dadurch gekennzeichnet, dass** der Durchmesser des Kreiszylinders im Einlauf- und/oder Auslaufbereich verringert ist.

4. Pufferförderer nach Anspruch 2 oder 3, **dadurch gekennzeichnet, dass** sich der Einlauf- und/oder der Auslaufbereich an einem axialen Ende des Kreiszylinders befinden.

5. Pufferförderer nach einem der Ansprüche 2 bis 4,
**dadurch gekennzeichnet, dass** ferner im Einlauf- und/oder im Auslaufbereich den Kreiszylinder über einen Teil seines Umfangs umschlingende Bänder (20, 40) zum Einführen und/oder Ausführen der Produkte umfasst.

6. Pufferförderer nach einem der vorherigen Ansprüche,
**dadurch gekennzeichnet, dass** der Kreiszylinder ein Hohlzylinder ist.

7. Pufferförderer nach Anspruch 6, **dadurch gekennzeichnet, dass** er mindestens eine in dem Hohlzylinder liegende Antriebswelle umfasst.

8. Pufferförderer nach einem der vorherigen Ansprüche,
**dadurch gekennzeichnet, dass** die Profilschiene in orthogonaler Parallelprojektion entlang der Längsachse betrachtet eine konzentrisch zur Mantelfläche angeordnete, kreisförmige Innenbahn aufweist.

9. Pufferförderer nach einem der vorherigen Ansprüche,
**dadurch gekennzeichnet, dass** der Querschnitt der Profilschiene in einem Längsschnitt der Wendelform durch die Längsachse betrachtet L-förmig ist, wobei die L-Form einen aufrechten und einen liegenden Schenkel aufweist, und bevorzugt dadurch, dass der aufrechte Schenkel des L in Radialrichtung außen von dem liegenden Schenkel liegt.

10. Pufferförderer nach einem der vorherigen Ansprüche, ferner mit einer bevorzugt entfernbar auf den Kreiszylinder aufgebrachten Beschichtung.

11. Pufferförderer nach einem der vorherigen Ansprüche, ferner mit einer Einrichtung (90) zum Blockieren der wendelförmig um den Antriebskörper herum angeordneten, stationären Bahn, wobei die Einrichtung bevorzugt im Endbereich der wendelförmig um den Kreiszylinder herum angeordneten, stationären Bahn angeordnet ist.

12. Anordnung von zwei Pufferförderern nach mindestens einem der vorhergehenden Ansprüche, bei der ein Produktauslauf des einen Pufferförderers mit einem Produkteinlauf des anderen Pufferförderers derart verbunden ist, dass die Produkte von dem einen Pufferförderer in den anderen Pufferförderer eintreten können.

13. Anordnung nach Anspruch 12, **dadurch gekennzeichnet, dass** die beiden Pufferförderer übereinander oder nebeneinander angeordnet sind.

14. Anordnung nach der zweiten Alternative von Anspruch 13, in Abhängigkeit von Anspruch 4, **dadurch gekennzeichnet, dass** sich der Auslaufbereich des einen Pufferförderers und der Einlaufbereich des anderen Pufferförderers an dem gleichen axialen Ende ihres Kreiszylinders befinden, und bei dem bevorzugt die Produkte mittels des einen Pufferförderers von oben nach unten und die Produkte mittels des anderen Pufferförderers von unten nach oben förderbar sind.

15. Verfahren zum Puffern von Produkten mittels einer Anordnung nach Anspruch 11 und einem der Ansprüche 12 oder 14 mit folgenden Schritten:
Fördern der beabstandet voneinander in den einen Pufferförderer einlaufenden Produkte entlang einer Förderrichtung, die sich entlang der wendelförmigen Bahnen des einen, in der Förderrichtung stromauf liegenden und dann des anderen, in der Förderrichtung stromab liegenden Pufferförderers erstreckt, durch
Betätigen der Einrichtung nach Anspruch 12 an dem in der Förderrichtung stromab liegenden Pufferförderer, so dass das Auslaufen von Produkten aus diesem Pufferförderer verhindert wird,
Rotieren der Kreiszylinder der beiden Pufferförderer, bis eine Vielzahl der Produkte in dem in der Förderrichtung stromab liegenden Pufferförderer keinen Abstand aufweisen,
Betätigen der Einrichtung nach Anspruch 12 an dem in der Förderrichtung stromab liegenden Pufferförderer, so dass das Auslaufen von Produkten aus diesem Pufferförderer ermöglicht wird.
